# EUROPÄISCHE PATENTANMELDUNG

(11) **EP 1 813 408 A1**
(43) Veröffentlichungstag der Anmeldung: **01.08.2007**
(21) Anmeldenummer: 06100890.0
(22) Anmeldetag: 26.01.2006
(51) Int. Cl.: B29C 44/44

(54) **Verfahren zum Befüllen von Formwerkzeugen mit expendierten Polymerpartikeln**

(71) Anmelder: BASF Aktiengesellschaft, 67056 Ludwigshafen (DE)
(72) Erfinder: Buscher, Markus, 67150 Niederkirchen (DE)

(57) **Zusammenfassung**

Verfahren zum Befüllen von Formwerkzeugen mit expandierten Polymerpartikeln, wobei man die Polymerpartikel mit einem Trägergas einer Füllvorrichtung zuführt und anschließend mittels der Füllvorrichtung mit dem Trägergas in das Formwerkzeug einbringt, dadurch gekennzeichnet, dass man die Polymerpartikel auf eine Temperatur T von 20 bis 100°C temperiert, bevor oder während sie die Füllvorrichtung verlassen.

## Beschreibung

Die Erfindung betrifft ein Verfahren zum Befüllen von Formwerkzeugen mit expandierten Polymerpartikeln, wobei man die Polymerpartikel mit einem Trägergas einer Füllvorrichtung zuführt und anschließend mittels der Füllvorrichtung mit dem Trägergas in das Formwerkzeug einbringt, dadurch gekennzeichnet, dass man die Polymerpartikel auf eine Temperatur T von 20 bis 100°C temperiert, bevor oder während sie die Füllvorrichtung verlassen.

Außerdem betrifft die Erfindung ein Verfahren zur Herstellung von Schaumstoff-Formteilen aus expandierbaren Polymerpartikeln, wobei man
a) ein teilweise oder vollständig geschlossenes Formwerkzeug mit den Partikeln befüllt,
b) das geschlossene Formwerkzeug erwärmt, wobei die Partikel unter Expansion miteinander zum Formteil verschweißen, und
c) das Formwerkzeug öffnet und das Formteil entnimmt,
dadurch gekennzeichnet, dass das Befüllen in Schritt a) gemäß dem obigen Verfahren erfolgt. Weiterhin betrifft die Erfindung Schaumstoff-Formteile, erhältlich nach dem letztgenannten Verfahren.

Außerdem betrifft die Erfindung eine Füllvorrichtung zum Befüllen von Formwerkzeugen mit expandierten Polymerpartikeln, wobei die Polymerpartikel mit einem Trägergas der Füllvorrichtung zugeführt und mit dem Trägergas in das Formwerkzeug eingebracht werden, dadurch gekennzeichnet, dass man der Füllvorrichtung Wasserdampf zuführt.

Schließlich betrifft die Erfindung einen Formteilautomat zur Herstellung von Schaumstoff-Formteilen aus expandierten Polymerpartikeln, dadurch gekennzeichnet, dass er das Formwerkzeug mit expandierten Polymerpartikeln befüllt gemäß dem erstgenannten Verfahren.

Formteile aus Schaumstoffen, beispielsweise aus expandiertem Polypropylen, expandiertem Polyethylen oder expandiertem Polystyrol, können in großen Stückzahlen automatisiert in sog. Formteilautomaten hergestellt werden. Dabei wird das leere Formwerkzeug in teilweise oder vollständig geschlossenem Zustand mit expandierten Partikeln aus dem entsprechenden Polymer gefüllt. Anschließend wird das mit feinen Öffnungen versehene Formwerkzeug durch Einleiten von Wasserdampf erwärmt, wodurch die Partikeln expandieren und miteinander zum Formteil verschweißen. Schließlich wird das Formwerkzeug geöffnet und das fertige Schaumstoff-Formteil entnommen.

Zum Füllen des Formwerkzeugs verwendet man eine Füllvorrichtung, beispielsweise einen Füllinjektor, der die Polymerpartikel mit einem strömenden Trägergas - meist wird Luft verwendet - in das Formwerkzeug einbringt. Damit sich das Formwerkzeug gleichmäßig mit den Partikeln füllt, wird üblicherweise der Druck des Trägergases derart reguliert, dass sich im Formwerkzeug ein während des gesamten Füllvorgangs konstanter Staudruck einstellt. Das Befüllen kann durch ein Injektorgas (z.B. Luft), dass am Kopf des Injektors in der Nähe des partikelhaltigen Trägergases ausströmt, optimiert werden.

Die Befüllung des Formwerkzeugs ist insbesondere bei anspruchsvollen Formteilen nicht in allem Fällen zufriedenstellend. Insbesondere bei Formteilen größerer Dicke, z.B. mehr als 15 cm, oder mit komplexer Geometrie können die Partikel ungleichmäßig verschweißen, was zu schlechteren mechanischen Eigenschaften und fehlerhaften Formteiloberflächen führt. Außerdem ist der Energieverbrauch beim Herstellen des Formteils hoch.

Es bestand die Aufgabe, den geschilderten Nachteilen abzuhelfen. Insbesondere sollte ein verbessertes Verfahren zum Befüllen von Formwerkzeugen mit expandierten Polymerpartikeln, beispielsweise solchen aus Polyolefinen oder Polystyrol, bereitgestellt werden. Das Verfahren sollte ein ebenmäßiges Befüllen des Werkzeugs ermöglichen, und bei der Herstellung der Formteile, insbesondere auch dicker oder komplizierter Formteile, sollten die Partikel zuverlässig und gleichmäßig miteinander verschweißen. Die erhältlichen Formteile sollten sich durch eine gute Oberfläche auszeichnen. Der Energieverbrauch bei der Formteilherstellung sollte verringert werden, und die Zykluszeiten bei der automatisierten Formteilherstellung sollten verkürzt werden.

Demgemäß wurde das eingangs definierte Verfahren zum Befüllen von Formwerkzeugen - nachfolgend auch als Füllverfahren bezeichnet-gefunden. Weiterhin wurde das genannte Verfahren zur Herstellung von Schaumstoff-Formteilen gefunden, das nachfolgend auch als Formteilverfahren bezeichnet wird. Außerdem wurden die nach dem Formteilverfahren erhältlichen Schaumstoff-Formteile gefunden. Schließlich wurde die eingangs genannte Füllvorrichtung, und der eingangs definierte Formteilautomat, enthaltend die Füllvorrichtung, gefunden. Bevorzugte Ausführungsformen der Erfindung sind den Unteransprüchen zu entnehmen. Alle Druckangaben sind Absolutdrucke, sofern nicht anders angegeben.

### Polymerpartikel

Erfindungsgemäß werden expandierte Polymerpartikel eingesetzt. Bevorzugt ist das Polymer ausgewählt aus Polyolefinen und Polystyrolen.

Als Polyolefine sind insbesondere geeignet:
a) Homopolypropylen,
b) Randomcopolymere des Propylens mit 0,1 bis 15, bevorzugt 0,5 bis 12 Gew.-% eines Comonomeren. Bevorzugtes Comonomer ist Ethylen oder ein C₄₋₁₀-α-Olefin oder deren Mischungen. Besonders bevorzugte Randomcopolymere sind Copolymere von Propylen mit 0,5 bis 6 Gew.-% Ethylen oder mit 0,5 bis 15 Gew.-% But-1-en, oder ein Terpolymer aus Propylen, 0,5 bis 6 Gew.-% Ethylen und 0,5 bis 6 Gew.-% But-1-en,
c) Mischungen der unter a) oder b) genannten Polymere mit 0,1 bis 75, bevorzugt 3 bis 50 Gew.-% eines Polyolefin-Elastomeren, z.B. eines Ethylen-Propylen-Blockcopolymeren mit 30 bis 70 Gew.-% Propylen,
d) Polyethylene, beispielsweise LD (low density), LLD (linear low density), MD (medium density) oder HD (high density), HMW (high molecular weight) oder UHMW (ultra high molecular weight), oder
e) Mischungen der unter a) bis d) genannten Polymere, wobei ggf. Phasenvermittler mitverwendet werden, um die Phasenanbindung der in manchen Fällen unverträglichen Polymere zu verbessern.

Die Polymere a) bis c) werden nachfolgend zusammenfassend als Polypropylen oder PP, d) als Polyethylen oder PE bezeichnet. Die Mischungen e) sind je nach Zusammensetzung den Polypropylenen oder den Polyethylenen zuzuordnen.

Der Kristallitschmelzpunkt geeigneter Polyolefine liegt üblicherweise im Bereich von 90 bis 170°C. Er ist beispielsweise als Peakmaximum im Differential Scanning Calorimetry (DSC)-Diagramm bestimmbar. Die Schmelzwärme der Polyolefine ist ebenfalls per DSC bestimmbar und beträgt im allgemeinen 20 bis 300 J/g. Der Schmelzflussindex (MFI, melt flow index) des Polyolefins beträgt in der Regel 0,1 bis 100 g/10 min, ermittelt bei 230°C und 2,16 kg Belastung für Propylenpolymere bzw. 190°C und 2,16 kg Belastung für Ethylenpolymere, nach DIN 53 735.

Bevorzugt verwendet man als Polyolefin ein Polypropylen. Bevorzugte Polyolefine sind Homo- oder Copolymere des Propylens mit bis zu 15 Gew.-% Etylen und/oder But-1-en, besonders bevorzugt sind Propylen-Ethylen-Copolymere mit 1 bis 5 Gew.-% Ethylen. Sie weisen einen Kristallitschmelzpunkt von 130 bis 160°C, und eine Dichte von etwa 0,9 g/cm³, auf.

Die Polyolefine sind bekannt und können nach üblichen Verfahren erhalten werden, beispielsweise nach dem Hochdruck- (ICI), Mitteldruck- (Phillips), Niederdruck- (Ziegler), Gasphasen-, Gasphasenwirbelbett- oder Metallocen-Verfahren.

Das Polyolefin kann mit bis zu 50 % seines Gewichts eines weiteren Thermoplasten mit einer Glasübergangstemperatur (bestimmbar z.B. als Wendepunkt im DSC-Diagramm) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor® P 1015 (Fa. Exxon), zugesetzt werden können. Es hat sich gezeigt, dass die Erfindung auch ohne Zumischen eines solchen weiteren Thermoplasten durchführbar ist. Dies ist insofern bevorzugt, als durch einen Fremdthermoplasten die Recyclierbarkeit des Polyolefins bzw. des daraus hergestellten Schaumstoffs leidet. Kautschukartige Ethylen-/Propylen-Copolymerisate, die zur Elastifizierung zugesetzt werden können, zählen in diesem Sinne nicht zu den weiteren Thermoplasten.

Polystyrol oder PS wird bei der vorliegenden Erfindung als Sammelbegriff für Homopolymere und Copolymere des Styrols oder anderer vinylaromatischer Monomere, sowie als Sammelbegriff für Blends dieser Polymere mit anderen Polymeren, verwendet. Unter Polystyrol im Sinne der Erfindung sind beispielsweise Standard-Polystyrol (General Purpose Polystyrene, GPPS, üblicherweise glasklar), schlagzähes Polystyrol (High Impact Polystyrene, HIPS, enthaltend z.B. Polybutadien- oder Polyisoprenkautschuk), Styrol-Maleinsäure(anhydrid)-Polymerisate, Acrylnitril-Butadien-Styrol-Polymerisate (ABS), Styrol-Acrylnitril-Polymerisate (SAN), oder deren Mischungen, zu verstehen. Bevorzugtes Polystyrol ist Standard-Polystyrol.

Weiterhin steht Polystyrol auch für Blends aus den vorgenannten Polymeren mit Polyphenylenethern (PPE) oder anderen thermoplastischen Polymeren.

Der Begriff Styrol wird hier analog als Sammelbegriff für die zur Polystyrolherstellung eingesetzten Monomere, verwendet, also für Styrol als solches, für andere vinylaromatische Monomere und für sonstige Comonomere, beispielsweise Acrylnitril, Butadien, Isopren oder Maleinsäure(anhydrid).

Besonders bevorzugt ist das Polymer der Polymerpartikel ausgewählt aus Polypropylen, Polyethylen und Polystyrol.

Die Herstellung der expandierten Polymerpartikel erfolgt in üblicher Weise. Zunächst werden unter Mitverwendung eines Treibmittels treibmittelhaltige (expandierbare) Polymerpartikel hergestellt. Diese expandiert man in einem zweiten Schritt zu expandierten Partikeln. Als Treibmittel können organische Flüssigkeiten oder anorganische Gase oder Gemische davon in üblichen Mengen eingesetzt werden. Beispielsweise eigenen sich aliphatische Kohlenwasserstoffe mit 2 bis 7 Kohlenstoffatomen, Alkohole, Ketone, Ether, halogenierten Kohlenwasserstoffe oder Wasser, oder deren Mischungen. Bevorzugt wird iso-Butan, n-Butan, iso-Pentan oder n-Pentan, bzw. deren Mischungen, eingesetzt. Geeignete anorganische Gase sind Stickstoff, Luft, Ammoniak oder Kohlendioxid.

Die Herstellung der expandierbaren Polymerpartikel kann nach verschiedenen Verfahren erfolgen, die dem Fachmann bekannt sind. Expandierbare Polystyrolpartikel können z.B. durch Suspensionspolymerisation von Styrol in Gegenwart von Treibmitteln hergestellt werden. Alternativ lassen sich expandierbare Polystyrol- oder Polyolefinpartikel auch im Extrusionsverfahren durch Einmischen des Treibmittels in eine Polymerschmelze mittels eines Extruders herstellen; dabei wird die treibmittelhaltige Schmelze unter Druck ausgetragen und z.B. mittels Unterwasserdruckgranulierung zu treibmittelhaltigen Polymerpartikeln granuliert. Expandierbare Polystyrol- oder Polyolefinpartikel werden gleichfalls erhalten im sog. Autoklav-Verfahren durch Imprägnieren von treibmittelfreien Polymerpartikeln mit dem Treibmittel unter Druck in einer erhitzten Suspension, wobei das Treibmittel in die erweichten Partikel diffundiert, und Abkühlen der Suspension unter Druck.

Die expandierbaren Partikel werden anschließend in an sich bekannter Weise durch Erwärmen expandiert. Dies wird auch als Vorschäumen bezeichnet und kann diskontinuierlich oder kontinuierlich in sog. Vorschäumern durchgeführt werden. Durch das Erwärmen - meist mit Wasserdampf - erweichen die Partikel unter gleichzeitiger Expansion des eingeschlossenen Treibmittels. Man erhält die gewünschten expandierten Partikel.

Alternativ kann man im Autoklav-Verfahren auch unmittelbar (ohne einen Vorschäumschritt) expandierte Partikel herstellen, indem man die erhitzte Suspension schlagartig entspannt anstatt sie unter Druck abzukühlen. Dabei expandieren die erweichten Partikel spontan.

Die Polymerpartikel können übliche Zusatzstoffe in den dafür gebräuchlichen Mengen enthalten, wie Antioxidantien, Stabilisatoren, Flammschutzmittel, Wachse, Nukleierungsmittel, Füllstoffe, Pigmente und Farbstoffe.

Als Nukleierungsmittel eignen sich beispielsweise Talkum, Wachse, insbesondere Polyolefinwachse wie z.B. Homo- oder Copolymere des Ethylens, außerdem Paraffine, Ruße, Graphitpulver, Kieselsäuren, bevorzugt pyrogene Kieselsäuren, weiterhin Zeolithe, Citronensäureester und Bentonite, insbesondere modifizierte Bentonite. Das Nukleierungsmittel bewirkt, dass bei der Expansion der expandierbaren Partikel ein feinzelliger Schaum entsteht, in manchen Fällen ermöglicht es überhaupt erst das Schäumen. Falls ein Nukleierungsmittel verwendet wird - zwingend erforderlich ist dies nicht- betragen die Mengen vorzugsweise 0,001 bis 10, vorzugsweise 0,1 bis 5 und insbesondere 0,5 bis 3 Gew.-%, bezogen auf das nukleierungsmittelhaltige Polymer.

Die expandierten Partikel werden in der Regel eine gewisse Zeit zwischengelagert. Diese Zwischenlagerung dient dem Druckausgleich zwischen dem Partikelinneren und der Umgebung, reduziert den Treibmittelgehalt und trocknet die Partikel.

### Befüllen des Formwerkzeugs

Erfindungsgemäß werden die expandierten Polymerpartikel mit einem Trägergas einer Füllvorrichtung zugeführt und anschließend mittels der Füllvorrichtung mit dem Trägergas in das Formwerkzeug eingebracht. Üblicherweise tritt das Trägergas am Kopf der Füllvorrichtung in das Formwerkzeug aus und transportiert die Polymerpartikel in das Formwerkzeug. Kopf bezeichnet das formwerkzeugseitige Ende der Füllvorrichtung.

Die Füllvorrichtung kann ein handelsüblicher Füllinjektor sein oder einen solchen enthalten. Darüber hinaus kann die Füllvorrichtung weitere konstruktive Merkmale aufweisen, z.B. eine Zufuhr von Wasserdampf oder anderen erwärmten Gasen, siehe weiter unten.

Als Trägergas eignen sich alle Gase, die bei den herrschenden Temperatur- und Druckbedingungen die Polymerpartikel physikalisch und chemisch nicht verändern. Geeignet sind beispielsweise Luft, Stickstoffgas, Edelgase, Kohlendioxidgas, und andere Gase. Bevorzugtes Trägergas ist Luft.

In der Regel ist die Füllvorrichtung über eine Transportleitung mit einem Druckfüllbehälter verbunden. Letzterer ist mit den expandierten Polymerpartikeln gefüllt und wird mit dem Trägergas beaufschlagt. Der Druck im Druckfüllbehälter liegt in der Regel bei 0,8 bis 13, bevorzugt 1,5 bis 7 bar. Über ein Bodenventil des Behälters werden die Partikel als Partikel-Trägergas-Mischung entnommen.

Der Gehalt der Partikel-Trägergas-Mischung an den Partikeln wird bevorzugt derart gewählt, dass die Mischung ein fluides, mittels Rohrleitungen transportierbares System ist und beträgt in der Regel 2 bis 200, bevorzugt 2 bis 100 g/l bei 20°C, bezogen auf die Mischung.

Der Druck der Partikel-Trägergas-Mischung beim Eintritt in die Füllvorrichtung beträgt üblicherweise 0,5 bis 13, bevorzugt 1,1 bis 8 und besonders bevorzugt 1,5 bis 5 bar, und der Volumenstrom der Partikel-Trägergas-Mischung beim Eintritt in die Füllvorrichtung liegt üblicherweise bei 1 bis 3000, bevorzugt 10 bis 1000 m³/h.

An der Rohrleitung vom Druckfüllbehälter zur Füllvorrichtung oder unmittelbar an der Füllvorrichtung kann man, falls erforderlich, partikelfreies Trägergas nachdosieren, um Druck, Temperatur bzw. den Partikelgehalt zu regulieren.

Erfindungsgemäß werden die Polymerpartikel auf eine Temperatur T von 20 bis 100°C temperiert, bevor oder während sie die Füllvorrichtung verlassen. Bevorzugt beträgt die Temperatur T mindestens 30, insbesondere mindestens 40 und besonders bevorzugt mindestens 50°C, und bevorzugt maximal 100, insbesondere maximal 90 und besonders bevorzugt maximal 80°C.

Die Temperatur T wird bevorzugt derart gewählt, dass die Polymerpartikel nicht oder nur in so geringem Ausmaß expandieren, dass sie die Transportleitungen bzw. die Füllvorrichtung nicht verstopfen. Eine Expansion um maximal 30 Vol.-%, bezogen auf das Volumen der Partikel vor der Temperierung, kann üblicherweise hingenommen werden. Bevorzugt beträgt diese Expansion 0 bis 10 Vol.-%.

In einer bevorzugten Ausführungsform i) temperiert man die Polymerpartikel, bevor sie in die Füllvorrichtung eintreten. Das Temperieren kann beispielsweise dadurch erfolgen, dass man die Partikel (genauer: die Partikel-Trägergas-Mischung) im Verlauf der Rohrleitung vom Druckfüllbehälter zur Füllvorrichtung temperiert, oder den Druckfüllbehälter temperiert, oder das dem Druckfüllbehälter zugeführte Trägergas temperiert.

In einer anderen, ebenfalls bevorzugten Ausführungsform ii) temperiert man die Partikel in der Füllvorrichtung, beispielsweise durch Beheizen des Füllinjektors auf die Temperatur T. Eine Temperierung der Partikel während sie die Füllvorrichtung verlassen kann beispielsweise dadurch erfolgen, dass man am Kopf der Füllvorrichtung erwärmtes Gas, z.B. Luft oder Wasserdampf ausströmen lässt.

Selbstverständlich können beide Ausführungsformen i) und ii) kombiniert werden. Das Temperieren der Partikel erfolgt u.a. durch Wärmeübergang vom erwärmten Trägergas auf die Partikel, wozu eine gewisse Verweildauer (Kontaktzeit) der Partikel in dem erwärmten Trägergas erforderlich ist. Die Verweildauer hängt u.a. von der gewünschten Partikeltemperatur, der Partikelgröße, -oberfläche und -wärmeleitfähigkeit ab und kann durch einfache Vorversuche ermittelt werden. Beispielsweise entspricht in der Ausführungsform ii) eine bestimmte Verweildauer einer bestimmten Flugzeit der Partikel.

Besonders bevorzugt werden die Polymerpartikel zunächst vor dem Verlassen der Füllvorrichtung auf eine Temperatur T₁ von 20 bis 70°C, und danach während des Verlassens der Füllvorrichtung auf eine Temperatur T₂ von 50 bis 100°C temperiert, wobei gilt T₂ > T₁.

Diese zweistufige Temperierung kann beispielsweise dadurch erfolgen, dass man zunächst die Partikel (genauer: die Partikel-Trägergas-Mischung) im Verlauf der Rohrleitung vom Druckfüllbehälter zur Füllvorrichtung, oder den Druckfüllbehälter, oder das dem Druckfüllbehälter zugeführte Trägergas auf 20 bis 70°C temperiert, und anschließend die auf diese Weise "vorgewärmten" Partikel durch am Kopf der Füllvorrichtung ausströmendes erhitztes Gas oder Wasserdampf auf 50 bis 100°C temperiert. Man kann die Temperierung auch in drei oder mehr Temperaturstufen vornehmen.

In einer besonders bevorzugten Ausführungsform temperiert man die Polymerpartikel derart, dass sie beim Verlassen der Füllvorrichtung eine Temperatur aufweisen, bei der sie erweichen. Es besteht die Vorstellung, dass ein die Füllvorrichtung verlassender Partikel sich beim Auftreffen auf die bereits im Formwerkzeug befindlichen Partikel besonders gut mit letzteren verbindet, wenn er erweicht ist.

In einer bevorzugten Ausführungsform führt man der Füllvorrichtung (zusätzlich zu der Partikel-Trägergas-Mischung) Wasserdampf zu. Die Wasserdampfzufuhr erfolgt bevorzugt kontinuierlich, und ebenfalls bevorzugt zeitgleich mit der Zufuhr der Partikel-Trägergas-Mischung. Jedoch kann man auch den Wasserdampf bereits zuführen, bevor die Zufuhr der Mischung beginnt. Die Wasserdampftemperatur beträgt üblicherweise 105 bis 180, bevorzugt 110 bis 170 und insbesondere 110 bis 164°C.

Der Wasserdampf kann bereits in der Füllvorrichtung mit der Partikel-Trägergas-Mischung gemischt werden. Bevorzugt ist dies jedoch nicht, da je nach Druck-, Temperatur- und Mischungsverhältnissen die Partikel in der Füllvorrichtung vorzeitig aufschäumen und die Füllvorrichtung verstopfen können. Bevorzugt ist das Verfahren dadurch gekennzeichnet, dass die Polymerpartikel-Trägergas-Mischung und der Wasserdampf getrennt voneinander aus der Füllvorrichtung in das Formwerkzeug austreten.

Der Druck des Wasserdampfs beim Eintritt in die Füllvorrichtung, z.B. am Kopf der Füllvorrichtung, beträgt üblicherweise 1,2 bis 11, bevorzugt 1,4 bis 8 und besonders bevorzugt 1,4 bis 7 bar, und der Wasserdampf-Volumenstrom beim Eintritt in die Füllvorrichtung liegt üblicherweise bei 100 bis 20.000, bevorzugt 500 bis 10.000 m³/h.

Der heiße Wasserdampf erwärmt die Polymerpartikel auf eine Temperatur, die üblicherweise 40 bis 0°C, bevorzugt 15 bis 0°C unter der Temperatur liegt, die bei der späteren Formteilherstellung zum Verschweißen der Partikel erforderlich ist (Verschweißungstemperatur). Besonders bevorzugt erwärmt der Wasserdampf die Partikel auf eine Temperatur, die 90 bis 100 % der Verschweißungstemperatur beträgt. Bevorzugt erwärmt der Wasserdampf die Partikel im Kopfbereich der Füllvorrichtung auf die Verschweißungstemperatur. Während des Befüllens der Formwerkzeugs werden durch den im Werkzeug herrschenden Staudruck (siehe weiter unten) die Partikel gegen die bereits im Werkzeug befindlichen Partikel gedrückt und es besteht die Vorstellung, dass die auf die Verschweißungstemperatur temperierten Partikel sich beim Auftreffen besser miteinander verbinden (verschweißen) als "kalt" eingeblasene Partikel.

Die Austrittsöffnung der Partikel-Trägergas-Mischung am Kopf der Füllvorrichtung ist üblicherweise als Düse ausgestaltet, die verstellbar sowie z.B. punkt- oder ringförmig (Ringspalt) ausgestaltet sein kann. Sofern Wasserdampf mitverwendet wird, beträgt der Abstand der Austrittsöffnungen (Düsen) von Partikel-Trägergas-Mischung und Wasserdampf üblicherweise 0 bis 100, bevorzugt 2 bis 20 mm. Man kann Wasserdampf und Partikel-Trägergas-Mischung durch jeweils eine, oder auch durch mehrere Düsen austreten lassen. Beispielsweise kann eine Partikel-Trägergas-Düse von mehreren Wasserdampfdüsen umgeben sein, oder umgekehrt. Bevorzugt sind die Düsen kreisförmig oder besonders bevorzugt als konzentrische Ringspalte angeordnet.

Die Temperaturen, Drucke und Volumenströme von Partikel-Trägergas-Mischung und - sofern mitverwendet - Wasserdampf sowie die Geometrie des Injektorkopfes, insbesondere der Abstand der Düsen, sind innerhalb der vorstehend genannten Grenzen vorzugsweise derart zu wählen, das die in das Formwerkzeug austretenden Partikel einerseits auf die genannte Temperatur vorgewärmt werden, jedoch andererseits nicht vorzeitig in der Füllvorrichtung aufschäumen bzw. verschweißen. Ein vorzeitiges Aufschäumen der Partikel ist unerwünscht, da die aus ihnen erhältlichen Formteile schlechtere Eigenschaften aufweisen oder gänzlich unbrauchbar sein können, und/oder weil die Düse der Partikel-Trägergas-Mischung durch aufschäumende Partikel verstopfen kann. Falls erforderlich kann man in der Füllvorrichtung durch geeignete Materialien die Wasserdampfleitung gegen die Partikel-Trägergas-Leitung thermisch isolieren.

Bei Bedarf kann man dem Formwerkzeug zusätzlich Wasserdampf auch über die Bedampfungsventile des Formteilautomaten zuführen.

Die in das mit feinen Öffnungen versehene Formwerkzeug eingeleiteten Gasströme bauen im Werkzeug in der Regel einen Staudruck auf, der mit dem Füllgrad des Werkzeugs, also der Menge der eingetragenen Partikel, korreliert. Der Staudruck beeinflusst die Größe der Partikelzwischenräume (Schüttdichte der Partikel unter Druck, bzw. Verdichtungsgrad) und damit die Güte des späteren Formteils und kann während des Befüllens mit einem oder mehreren Auslassventilen eingestellt werden.

Der Staudruck wird bevorzugt konstant gehalten. Durch einen konstanten Staudruck lässt sich das Werkzeug gleichmäßiger füllen, insbesondere sind die Partikelzwischenräume während des gesamten Füllvorgangs und damit über die gesamte Kavität des Werkzeugs annähernd gleich groß und man erhält bei der Formteilherstellung ein hochwertiges Formteil.

Bei Polymerpartikeln aus Polystyrol liegt der Staudruck üblicherweise bei etwa 1 bis 10, bevorzugt etwa 1 bis 5 bar und besonders bevorzugt etwa 1 bar, d.h. besonders bevorzugt werden Polystyrolpartikel drucklos in das Werkzeug eingefüllt. Bei der anschließenden Formteilherstellung durch Expansion und Verschweißen der Partikel (siehe weiter unten) wird die erforderliche Expansionskraft in der Regel durch im Partikel noch vorhandenes, restliches Treibmittel aufgebracht.

Bei Polymerpartikeln aus Polyolefinen, insbesondere Polypropylen oder Polyethylen, liegt der Staudruck üblicherweise bei 1 bis 10, bevorzugt 1 bis 5 und insbesondere bei 1,1 bis 4 bar. Besonders bevorzugt werden die Polyolefinpartikel mit mehr als 1 bar Staudruck in das Werkzeug eingefüllt (sog. Druckfüllverfahren). Durch den Staudruck werden die Partikel komprimiert, und bei der anschließenden Formteilherstellung durch Expansion und Verschweißen wird die erforderliche Expansionskraft durch Ausdehnung der komprimierten Partikel aufgebracht (Schäume aus Polyolefinen weisen üblicherweise eine hohe Rückstellkraft auf). Alternativ oder zusätzlich kann man die Partikel auch im Werkzeug mechanisch komprimieren (sog. Crackfüllverfahren) oder vorab einer Druckbeladung unterwerfen. Zur Druckbeladung siehe weiter unten.

Üblicherweise unterbricht die Füllvorrichtung die Gasströme (Partikel-Trägergas-Mischung und ggf. Wasserdampf), sobald das Formwerkzeug den beabsichtigten Füllgrad erreicht hat. Bevorzugt wird das Formwerkzeug vollständig mit den Partikeln gefüllt, damit bei der späteren Formteilherstellung die Partikel problemlos miteinander verschweißen.

Die Zufuhrdauer der Partikel-Trägergas-Mischung bzw. des Wasserdampfs richtet sich nach der Partikelmenge, die bis zur gewünschten Füllung des Werkzeugs erforderlich ist, sowie nach den Gasvolumenströmen und dem Partikelgehalt der Partikel-Trägergas-Mischung. Sie kann in weiten Grenzen variieren und beträgt beispielsweise 1 sec bis 10 min, bevorzugt 1 sec bis 3 min.

In einer bevorzugten Ausführungsform führt man der Füllvorrichtung nach dem Befüllen des Formwerkzeugs - also nach dem Unterbrechen der Zufuhr von Partikel-Trägergas-Mischung und ggf. Wasserdampf - ein Injektorgas zu, das keine Polymerpartikel enthält. Als Injektorgas eignen sich die bereits für das Trägergas genannten Gase, wobei Träger- und Injektorgas gleich oder verschieden sein können. Bevorzugt verwendet man Luft als Injektorgas. Das Injektorgas kann auch bereits während des Befüllens zugeführt werden.

Das Injektorgas kann in die Leitung der Partikel-Trägergas-Mischung oder, falls vorhanden, in die Wasserdampfleitung eingeleitet werden. Bevorzugt wird das Injektorgas durch eine separate Leitung und Düse zugeführt. Das Injektorgas verhindert, dass der heiße Wasserdampf in die Füllvorrichtung zurückströmt und dort diejenigen Partikel aufschäumt, die nach dem Unterbrechen des Partikel-Trägergas-Stroms in der Leitung liegengebliebenen sind. Dies würde zur Verstopfung des Injektors führen. Somit ist das Injektorgas ein Spülgas, was nach dem Befüllen die Transportleitungen frei hält.

Bevorzugt lässt man das Injektorgas durch eine eigene Düse in der Nähe der Wasserdampf-Düse austreten, und besonders bevorzugt wird zwischen Wasserdampf (beim Befüllen) und Injektorgas (zum Spülen) mittels eines Zweiwegeventils umgeschaltet. Falls ohne Wasserdampf gearbeitet wird, tritt das Injektorgas bevorzugt in der Nähe der Düse für die Partikel-Trägergas-Mischung aus. Üblicherweise drückt das Injektorgas die überschüssigen Partikel in den Druckfüllbehälter zurück.

Die Temperatur des Injektorgases beim Eintritt in die Füllvorrichtung beträgt üblicherweise -10 bis 80, bevorzugt 15 bis 60°C; der Injektorgasdruck liegt in der Regel bei 1 bis 16, bevorzugt 1,5 bis 8 bar. Der Injektorgas-Volumenstrom beim Eintritt in die Füllvorrichtung liegt üblicherweise bei 2 bis 5000, bevorzugt 100 bis 2000 m³/h. Je nach Dimensionierung der Füllvorrichtung strömt das Injektorgas beispielsweise 1 bis 60 sec in die Füllvorrichtung.

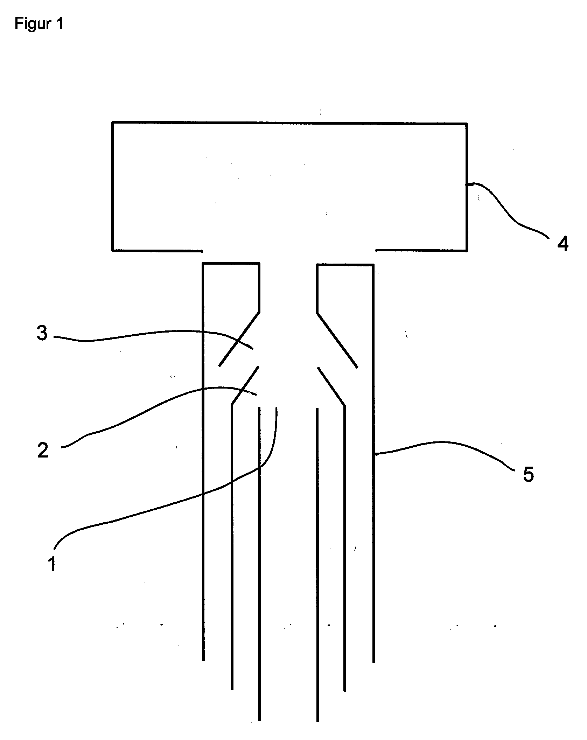

Bevorzugt sind am Kopf der Füllvorrichtung die Austrittsöffnungen konzentrisch als Ringspalt-Düsen angeordnet. Abbildung 1 zeigt schematisch eine besonders bevorzugte Ausführungsform und entspricht Anordnung A in der folgenden Tabelle. Dargestellt ist ein Längsschnitt durch den Kopf der Füllvorrichtung 5 mit drei konzentrisch angeordneten Düsen 1, 2 und 3 sowie dem Formwerkzeug 4. Die Partikel-Trägergas-Mischung strömt aus der inneren Düse 1 aus. Der Wasserdampf strömt aus der Ringspalt-Düse 3 aus. Nach dem Befüllen des Werkzeugs strömt das Injektorgas aus der Ringspalt-Düse 2 aus, die zwischen der inneren Düse 1 und der Ringspalt-Düse 3 angeordnet ist.

Diese Anordnung kann abgewandelt werden. Beispielsweise kann man die Gasströme "vertauschen" wie in der folgenden Tabelle dargestellt. Falls ohne Wasserdampf gearbeitet wird, kann die Wasserdampf-Düse und ggf. auch die Injektorgas-Düse entfallen. Falls ohne Injektorgas gearbeitet wird, kann die Injektorgas-Düse entfallen. Die Anordnung A ist besonders bevorzugt.

| Anordnung | Düse für Partikel-Trägergas-Mischg. | Düse für Wasserdampf | Düse für Injektorgas |
|---|---|---|---|
| A | 1 | 3 | 2 |
| B | 1 | 2 | 3 |
| C | 2 | 1 | 3 |
| D | 2 | 3 | 1 |
| E | 3 | 1 | 2 |
| F | 3 | 2 | 2 |

Das Befüllen und - sofern vorhanden - die Injektorgaszufuhr kann automatisiert gesteuert werden. Wenn das Formwerkzeug vollständig gefüllt ist, beginnt sich die Strömungsrichtung der Partikel-Trägergas-Mischung umzukehren. Dies ist direkt messbar als Änderung der Strömungsrichtung oder indirekt als Temperaturänderung, meist -erhöhung, der Mischung messbar, hervorgerufen durch das Zurückströmen von erwärmtem Gas aus dem Werkzeug in die Füllvorrichtung. In einer bevorzugten Ausführungsform ist das erfindungsgemäße Verfahren dadurch gekennzeichnet, dass die Füllvorrichtung oder die an ihr angebrachte Zufuhr der Partikel-Trägergas-Mischung mit mindestens einer Messvorrichtung für die Strömungsrichtung oder die Temperatur der Polymerpartikel-Trägergas-Mischung versehen ist.

Die Messvorrichtung ist bevorzugt ein Strömungssensor bzw. ein Temperatursensor und kann an jeder Stelle der Rohrleitung für die Partikel-Trägergas-Mischung angebracht sein. Bevorzugt ist sie nahe an der Füllvorrichtung oder deren Kopf angebracht, da sich die Strömungsrichtung bzw. die Temperatur der Mischung ausgehend vom Formwerkzeug ändert. Man kann auch Kombinationen von Strömungs- und Temperatursensoren einsetzen.

Die Messvorrichtungen sind bevorzugt mit einer - vorzugsweise automatisierten - Steuerung verbunden, die in Abhängigkeit des von der Messvorrichtung erhalten Signals die Zufuhr von Partikel-Trägergas-Mischung und ggf. Wasserdampf unterbricht und, falls vorhanden, die Injektorgaszufuhr zum Spülen der Leitungen öffnet. Zu diesem Zweck sind die Wasserdampf- und Injektorgaszufuhr bevorzugt mit entsprechenden Schaltventilen versehen.

Bevorzugt ist das Verfahren dadurch gekennzeichnet, dass die Füllvorrichtung die Zufuhr der Polymerpartikel-Trägergas-Mischung beendet, sobald die Messvorrichtungen anzeigen, dass das Formwerkzeug mit den Polymerpartikeln gefüllt ist.

Je nach der Größe und Geometrie der erwünschten Schaumstoff-Formteile kann das verwendete Formwerkzeug klein oder groß sowie einfach oder kompliziert gestaltet sein. Insbesondere große und/oder komplizierte Werkzeuge kann man statt mit einem einzigen auch mit zwei oder mehr Füllvorrichtungen befüllen. Dadurch lässt sich das Werkzeug schneller und gleichmäßiger befüllen. Die Köpfe der Füllvorrichtungen können beispielsweise an unterschiedlichen Stellen des Werkzeugs montiert sein.

Falls mehrere Füllvorrichtungen zum Einsatz kommen, wird mindestens eine Füllvorrichtung erfindungsgemäß mit temperierten Polymerpartikeln betrieben wie vorstehend beschrieben. Die weiteren Füllvorrichtungen kann man mit oder (nicht erfindungsgemäß) ohne temperierte Partikel betreiben.

Bevorzugt werden alle Füllvorrichtungen erfindungsgemäß, d.h. mit temperierten Partikeln betrieben. Dabei können sich ihre Betriebsbedingungen, beispielsweise die Mengen, Drucke und Temperaturen von Partikel-Trägergas-Mischung, ggf. Wasserdampf und ggf. Injektorgas sowie der Partikelgehalt der Partikel-Trägergas-Mischung gleich oder verschieden sein. Gleiches gilt sinngemäß für die apparative Ausgestaltung, beispielsweise die Geometrie der Füllvorrichtungen, sowie ggf. die Messvorrichtungen, Steuerungen und Ventile.

### Herstellung von Schaumstoff-Formteilen

In dem Formwerkzeug, dass gemäß dem erfindungsgemäßen Füllverfahren mit den expandierbaren Polymerpartikeln befüllt wurde, werden Schaumstoff-Formteile hergestellt.

Das erfindungsgemäße Verfahren zur Herstellung von Schaumstoff-Formteilen aus expandierbaren Polymerpartikeln (Formteilverfahren), weist bevorzugt folgende Schritte auf:
a) ein teilweise oder vollständig geschlossenes Formwerkzeug wird mit den Partikeln befüllt,
b) das geschlossene Formwerkzeug wird erwärmt, wobei die Partikel unter Expansion miteinander zum Formteil verschweißen, und
c) das Formwerkzeug wird geöffnet und das Formteil entnommen,
und ist dadurch gekennzeichnet, dass das Befüllen in Schritt a) gemäß dem weiter oben beschriebenen Füllverfahren erfolgt.

Wie bereits erwähnt, kann man in Schritt a) das Formwerkzeug drucklos füllen, was bei Polystyrolpartikeln bevorzugt ist. Polyolefinpartikel werden gemäß dem Druckfüllverfahren vorzugsweise unter Überdruck eingefüllt, oder ebenso bevorzugt gemäß dem Crackfüllverfahren im Werkzeug mechanisch komprimiert.

Das Erwärmen des Formwerkzeugs in Schritt b) erfolgt üblicherweise durch Wasserdampf, der durch die feinen Öffnungen, mit denen das Formwerkzeug versehen ist, in das geschlossene Formwerkzeug eingeleitet wird. Anstelle von Wasserdampf kann man auch andere Heizmedien, beispielsweise Heißluft verwenden, jedoch ist Wasserdampf besonders bevorzugt. Das Formwerkzeug ist mit Auslassventilen, sog. Bodenventilen, versehen, durch die der Wasserdampf aus dem Werkzeug austreten kann. Üblicherweise ist jede Hälfte des Formwerkzeugs mit mindestens einem Einlassventil und mindestens einem Auslassventil für den Wasserdampf versehen.

Die Temperatur des Wasserdampfs (Verschweißungstemperatur) beträgt üblicherweise 105 bis 180, bevorzugt 110 bis 170°C. Der Druck liegt in der Regel bei 1,2 bis 11, bevorzugt 1,4 bis 8 und besonders bevorzugt 1,4 bis 7 bar.

Die Wasserdampfmenge kann je nach Größe und Geometrie des Formteils stark variieren und beträgt beispielsweise 100 bis 20.000, bevorzugt 5000 bis 10.000 m³/h. Die Dauer des Erwärmens und Verschweißens in Schritt b) kann in gleicher Weise variieren und beträgt z.B. 1 bis 100, bevorzugt 3 bis 20 und besonders bevorzugt 4 bis 10 sec.

In der Regel erfordern Polyolefinpartikel eine höhere Temperatur, einen höheren Druck und eine größere Menge des Wasserdampfs, verglichen mit Polystyrolpartikeln. Da bei dem erfindungsgemäßen Füllverfahren (= Schritt a) des Formteilverfahrens) keine kalten, sondern temperierte Partikel verwendet werden, ist üblicherweise der Energieverbrauch in Schritt b) geringer als bei den Verfahren des Standes der Technik.

Die Beaufschlagung mit Wasserdampf erfolgt in der Regel in vier Schritten. Zunächst wird in einem Spülschritt bei geöffneten Dampfauslassventilen die Luft aus dem Werkzeug verdrängt. Anschließend werden die Polymerpartikel durch je eine Bedampfung in jede der Querrichtungen vorgewärmt und dabei im Kern des Formteils bereits in untergeordnetem Ausmaß verschweißt. Schließlich werden bei der sog. Autoklavbedampfung die Dampfauslassventile geschlossen und alle Seiten der Formteiloberfläche mit Dampf beaufschlagt, wodurch die Partikel vollständig zum Schaumstoff-Formteil verschweißen.

Durch die Temperaturerhöhung expandieren und verschweißen die Partikel. Dabei wird bevorzugt das vorhandene Zwischenpartikelvolumen vollständig oder nahezu vollständig ausgefüllt. Bei Polystyrolpartikeln erfolgt die Expansion in der Regel aufgrund eingeschlossener Treibmittelreste, bei Polyolefinpartikeln aufgrund der Rückstellkraft der zuvor durch den Staudruck oder mechanisch komprimierten Partikel.

In Schritt c) wird das Formwerkzeug geöffnet und das fertige Formteil entnommen. Falls erforderlich, kann man das Formteil nach dem Verschweißen und vor oder nach dem Öffnen des Werkzeugs noch eine gewisse Zeit ruhen und abkühlen lassen. Beispielsweise kann man Werkzeug und Formteil mit Wasser abkühlen; dies kann durch Anlegen eines Vakuums beschleunigt werden.

Nach dem Entformen kann das Formteil in üblicher Weise getrocknet werden. Insbesondere bei Formteilen aus Polyolefinschaumstoff kann es vorteilhaft sein, sie beispielsweise 30 min bis 10 h, bevorzugt 2 bis 6 h bei 60 bis 90°C zu tempern, um die Dimensionsstabilität der Formteile zu erhöhen.

Bei Schaumstoff-Formteilen aus Polystyrol lässt sich die Formteildichte durch die Schüttdichte der Polystyrolpartikel einstellen. In vielen Fällen liegt die Formteildichte im Bereich der Partikelschüttdichte. Polyolefinpartikel sind stärker komprimierbar als Polystyrolpartikel, weshalb man die Dichte von Schaumstoff-Formteilen aus Polyolefin durch Variation des Staudrucks in weiten Grenzen variieren kann. Ein höherer Staudruck bewirkt eine stärkere Komprimierung der Partikel und führt zu Schaumstoff-Formteilen höherer Dichte.

Eine noch größere Variation der Formteildichte gelingt durch Druckbeladung der Polymerpartikel vor Schritt b). Dabei werden die expandierten Partikel vor ihrer Verarbeitung zum Formteil, also vor dem Expandieren und Verschweißen, für die Dauer von beispielsweise 0,5 bis 50, bevorzugt 3 bis 12 Stunden (Druckbeladungszeit) einem erhöhten Druck ausgesetzt. Die Temperatur bei dieser Druckbeladung beträgt beispielsweise 0 bis 100, bevorzugt 20 bis 90°C, wobei höhere Temperaturen innerhalb des genannten Bereiches die Druckbeladung erleichtern.

Der Enddruck der Druckbeladung beträgt in der Regel 1,5 bis 6, insbesondere 2 bis 5 bar. Bevorzugt wird nicht spontan der Enddruck angelegt, sondern der Druck über die gewünschte Druckbeladungszeit entlang einer exponentiell, stufenförmig oder bevorzugt linear ansteigenden Funktion erhöht, bis der gewünschte Enddruck erreicht ist. Der Enddruck wird vor der Verarbeitung der Partikel zum Formteil (Schritt b)) üblicherweise 0 bis 1000, bevorzugt 30 bis 300 min gehalten.

Die Druckbeladung kann mit Luft erfolgen, jedoch kann man auch die anderen, beim Trägergas bereits genannten Gase verwenden. Insbesondere für Partikel aus Polyolefinen kann eine Druckbeladung vorteilhaft sein, da sie in vielen Fällen die Oberflächenqualität der Schaumstoff-Formteile verbessert.

Die druckbeladenen Polymerpartikel werden anschließend zum Schaumstoff-Formteil verarbeitet wie in Schritt b) und c) beschrieben.

Die Schritte b) und c) können ebenso wie Schritt a) automatisiert erfolgen. Beispielsweise kann man handelsübliche Formteilautomaten, wie sie etwa von den Firmen Kurtz GmbH, Kreuzwertheim; Erlenbach GmbH, Lautert; oder Teubert Maschinenbau GmbH, Blumberg, erhältlich sind, gemäß dem erfindungsgemäßen Füllverfahren umgestalten, also insbesondere darin eine erfindungsgemäß betriebene Füllvorrichtung verwenden.

Die mit dem Formteilverfahren erhältlichen Schaumstoff-Formteile sind ebenfalls Gegenstand der Erfindung. Solche Formteile sind beispielsweise Kfz-Stoßfänger, Kfz-Aufprallschutzelemente, wiederverwendbare Transportbehälter im Industrie- und Lebensmittelbereich (z.B. Ladungsträger oder Cateringboxen), wärmedämmende oder gegen Stoßbeanspruchung schützende Verpackungen, sowie Schaumstoffplatten. Auch dicke Formteile mit einer Dicke von z.B. mehr als 15 cm lassen sich problemlos und in guter Qualität herstellen. Dies gilt ebenso für kompliziert geformte Formteile.

Das erfindungsgemäße Füllverfahren ermöglicht ein gleichmäßiges Befüllen des Werkzeugs. Auch wenn mit dem erfindungsgemäßen Formteilverfahren dicke oder komplizierte Formteile hergestellt werden, verschweißen die Partikel zuverlässig und gleichmäßig miteinander. Das erfindungsgemäße Formteilverfahren hat einen geringeren Energieverbrauch als die Verfahren des Standes der Technik, und zeichnet sich durch kurze Zykluszeiten aus. Die damit erhältlichen, erfindungsgemäßen Schaumstoff-Formteile weisen ein ausgewogenes Eigenschaftsprofil mit einer hohen Oberflächenqualität auf.

Gegenstand der Erfindung ist außerdem eine Füllvorrichtung zum Befüllen von Formwerkzeugen mit expandierten Polymerpartikeln, wobei die Polymerpartikel mit einem Trägergas der Füllvorrichtung zugeführt und mit dem Trägergas in das Formwerkzeug eingebracht werden, dadurch gekennzeichnet, dass man der Füllvorrichtung Wasserdampf zuführt.

Weiterer Erfindungsgegenstand ist ein Formteilautomat zur Herstellung von Schaumstoff-Formteilen aus expandierten Polymerpartikeln, dadurch gekennzeichnet, dass er das Formwerkzeug mit expandierten Polymerpartikeln befüllt gemäß dem beschriebenen Füllverfahren.

Bevorzugt ist der Formteilautomat dadurch gekennzeichnet, dass er mindestens eine Füllvorrichtung aufweist wie vorstehend definiert, also eine Füllvorrichtung mit Wasserdampfzufuhr.

### Beispiel

Als expandierte Polymerpartikel wurde der Polypropylen-Schaumstoff Neopolen® P 9230 K von BASF eingesetzt. Seine Schüttdichte betrug 28 kg/m³. Eine Druckbeladung wurde nicht vorgenommen.

Die Polymerpartikel wurden per Druckfüllverfahren mit einem handelsüblichen Formteilautomaten in ein Formwerkzeug eingebracht. Als Trägergas und Injektorgas verwendete man Luft. Als Füllvorrichtung wurden drei Füllinjektoren gemäß Abbildung 1 eingesetzt, die an verscheidenen Stellen des Formwerkzeugs montiert waren. Jeder Füllinjektor wies eine Düse 1 für die Partikel-Luft-Mischung, eine Düse 2 für die Injektorluft, und eine Düse 3 für Wasserdampf auf.

Die Kavität des mit feinen Öffnungen versehenen Formwerkzeugs hatte die Gestalt eines bei Sportveranstaltungen verwendeten Siegerpodests von 770 mm Länge, 200 mm Breite und 100 mm maximaler Höhe.

Das Werkzeug wurde geschlossen und durch Einleiten von Wasserdampf (1 bar, 5 sec) vorgeheizt. Es wurde 2 sec entspannt. Anschließend führte man dem Werkzeug 10 sec Wasserdampf mit 3,5 bar Fülldruck durch die Füllinjektoren (bei geschlossener Partikel-Trägergas-Zufuhr) und unterstützend durch Bedampfungsventile des Formteilautomaten zu; der Dampfstaudruck betrug 2 bar. Danach wurde an den Füllinjektoren bei weiterhin geöffneter Wasserdampfzufuhr auch die Zufuhr der Partikel-Trägergas-Mischung geöffnet und dem Werkzeug solange (etwa 8 sec) die Partikel-Luft-Mischung mit einem Fülldruck von 2,5 bar zugeführt (der Staudruck betrug 2 bar), bis eingebaute Sensoren erkannten, dass das Werkzeug vollständig gefüllt war. Die Zufuhr der Partikel-Luft-Mischung und des Wasserdampfs wurde unterbrochen und mit Injektorluft (4 bar, 5 sec) überschüssige Partikel zurück in das Füllgerät gedrückt. Das Werkzeug wurde 30 sec gekühlt, nach 30 sec Standzeit geöffnet und das Formteil entnommen.

Man temperte das Formteil 4 Stunden bei 80°C. Die Dichte des erhalten Formteils betrug 48 kg/m³.

## Patentansprüche

1. Verfahren zum Befüllen von Formwerkzeugen mit expandierten Polymerpartikeln, wobei man die Polymerpartikel mit einem Trägergas einer Füllvorrichtung zuführt und anschließend mittels der Füllvorrichtung mit dem Trägergas in das Formwerkzeug einbringt, **dadurch gekennzeichnet, dass** man die Polymerpartikel auf eine Temperatur T von 20 bis 100°C temperiert, bevor oder während sie die Füllvorrichtung verlassen.

2. Verfahren nach Anspruch 1, **dadurch gekennzeichnet, dass** die Polymere der Polymerpartikel ausgewählt sind aus Polypropylen, Polyethylen und Polystyrol.

3. Verfahren nach den Ansprüchen 1 bis 2, **dadurch gekennzeichnet, dass** das Trägergas Luft ist.

4. Verfahren nach den Ansprüchen 1 bis 3, **dadurch gekennzeichnet, dass** man die Polymerpartikel temperiert, bevor sie in die Füllvorrichtung eintreten.

5. Verfahren nach den Ansprüchen 1 bis 3, **dadurch gekennzeichnet, dass** man die Polymerpartikel in der Füllvorrichtung temperiert.

6. Verfahren nach den Ansprüchen 1 bis 5, **dadurch gekennzeichnet, dass** man die Polymerpartikel zunächst vor dem Verlassen der Füllvorrichtung auf eine Temperatur T₁ von 20 bis 70°C, und danach während des Verlassens der Füllvorrichtung auf eine Temperatur T₂ von 50 bis 100°C temperiert, wobei gilt T₂ > T₁.

7. Verfahren nach den Ansprüchen 1 bis 6, **dadurch gekennzeichnet, dass** man die Polymerpartikel derart temperiert, dass sie beim Verlassen der Füllvorrichtung eine Temperatur aufweisen, bei der sie erweichen.

8. Verfahren nach den Ansprüchen 1 bis 7, **dadurch gekennzeichnet, dass** man der Füllvorrichtung Wasserdampf zuführt.

9. Verfahren nach den Ansprüchen 1 bis 8, **dadurch gekennzeichnet, dass** die Temperatur des Wasserdampfs 105 bis 180°C beträgt.

10. Verfahren nach den Ansprüchen 1 bis 9, **dadurch gekennzeichnet, dass** man der Füllvorrichtung nach dem Befüllen des Formwerkzeugs ein Injektorgas zuführt, das keine Polymerpartikel enthält.

11. Verfahren nach den Ansprüchen 1 bis 10, **dadurch gekennzeichnet, dass** die Polymerpartikel-Trägergas-Mischung und der Wasserdampf getrennt voneinander aus der Füllvorrichtung in das Formwerkzeug austreten.

12. Verfahren nach den Ansprüchen 1 bis 11, **dadurch gekennzeichnet, dass** die Füllvorrichtung oder die an ihr angebrachte Zufuhr der Partikel-Trägergas-Mischung mit mindestens einer Messvorrichtung für die Strömungsrichtung oder die Temperatur der Polymerpartikel-Trägergas-Mischung versehen ist.

13. Verfahren nach den Ansprüchen 1 bis 12, **dadurch gekennzeichnet, dass** die Füllvorrichtung die Zufuhr der Polymerpartikel-Trägergas-Mischung beendet, sobald die Messvorrichtungen anzeigen, dass das Formwerkzeug mit den Polymerpartikeln gefüllt ist.

14. Verfahren zur Herstellung von Schaumstoff-Formteilen aus expandierbaren Polymerpartikeln, wobei man
a) ein teilweise oder vollständig geschlossenes Formwerkzeug mit den Partikeln befüllt,
b) das geschlossene Formwerkzeug erwärmt, wobei die Partikel unter Expansion miteinander zum Formteil verschweißen, und
c) das Formwerkzeug öffnet und das Formteil entnimmt,
**dadurch gekennzeichnet, dass** das Befüllen in Schritt a) gemäß dem Verfahren der Ansprüche 1 bis 13 erfolgt.

15. Schaumstoff-Formteile, erhältlich nach dem Verfahren gemäß Anspruch 14.

16. Füllvorrichtung zum Befüllen von Formwerkzeugen mit expandierten Polymerpartikeln, wobei die Polymerpartikel mit einem Trägergas der Füllvorrichtung zugeführt und mit dem Trägergas in das Formwerkzeug eingebracht werden, **dadurch gekennzeichnet, dass** man der Füllvorrichtung Wasserdampf zuführt.

17. Formteilautomat zur Herstellung von Schaumstoff-Formteilen aus expandierten Polymerpartikeln, **dadurch gekennzeichnet, dass** er das Formwerkzeug mit expandierten Polymerpartikeln befüllt gemäß dem Verfahren wie definiert in den Ansprüchen 1 bis 13.

18. Formteilautomat gemäß Anspruch 17, **dadurch gekennzeichnet, dass** er mindestens eine Füllvorrichtung gemäß Anspruch 16 aufweist.
